# EUROPÄISCHE PATENTANMELDUNG

(11) **EP 1 132 295 A2**
(43) Veröffentlichungstag der Anmeldung: **12.09.2001**
(21) Anmeldenummer: 01102366.0
(22) Anmeldetag: 02.02.2001
(51) Int. Cl.: B64D 13/06

(54) **Hochleistungsklimaanlage mit redundanter und gestufter Rezirkulationszumischung für ein Verkaufsflugzeug**

(30) Priorität: 08.03.2000 DE 10011238
(71) Anmelder: EADS Airbus GmbH, 21129 Hamburg (DE)
(72) Erfinder: Buchholz, Uwe Albert, Dipl.-Ing., 21640 Bliedersdorf (DE); Scherer, Thomas, Dr.-Ing., 22559 Hamburg (DE)
(74) Vertreter: Hansmann, Dierk, Dipl.-Ing.

(57) **Zusammenfassung**

Bei der Hochleistungsklimaanlage beziehen die einem Druckrumpf (20) integrierten Temperatur- / Kabinenzonen, denen eine Druckregelanlage zugeordnet ist, die Luft aus einer Hochdruckluftversorgung (1). Mindestens zwei Klimaaggregate (2), die eine von der Hochdruckluftversorgung (1) eingespeiste abgekühlte Druckluft auf ein Druckrumpfeingangsdruckniveau entspannen und diese gleichzeitig bis zu Temperaturen unterhalb des Wassergefrierpunktes abkühlen, sind mit im Druckrumpf (20) angeordneten Vormischanlagen (3), die dem betreffenden Klimaaggregat (2) nachgeschaltet sind, über eine Kaltluftversorgungsleitung verbunden. Außerdem ist die dem betreffenden Klimaaggregat (2) nachgeschaltete einzelne Vormischanlage (3) über eine Rezirkulationsluftzuleitung (73) mit wenigstens einer Rezirkulationseinheit (4), die mit einer Druckrumpfluft (30) versorgt wird, verbunden. Dabei wird die von der einzelnen Rezirkulationseinheit (4) zugeführte Druckrumpfluft (30) mengenmäßig variabel der betreffenden Vormischanlage (3) zugeleitet und mit dem Klimaaggregatluftstrom (71) mengenmäßig gemischt. Weiter ist die einzelne Vormischeinheit (3), die ausgangsseitig eine aus der Druckrumpfluft (30) und der Klimaaggregatluft (71) bestehende vorgemischte Luft bereitstellt, über eine Vormischluftversorgungsleitung (72) einer Luftverteilmischkammer (6), der die vorgemischte Luft zugeführt wird, angeschlossen. Dabei wird in der Luftverteilmischkammer (6) die ihr zugeführte vorgemischte Luft vereinigt und gesammelt, wobei diese vereinigte gesammelte Luft als Luftverteilmischkammerluft von den angeschlossenen Vormischanlagen (3) ausgangsseitig bereitstellt und mengenmäßig über ihr angeschlossene Mischluftführungsleitungen, denen jeweils eine Nachmischeinheit angeschlossen ist, letzteren zuleitet. Außerdem sind die Nachmischeinheiten, die einer Rezirkulationsversorgungsleitung angeschlossen sind, mit mindestens einer der Rezirkulationsversorgungsleitung angeschlossenen lokalen Rezirkulationseinheit (4) verbunden, in denen der von der Luftverteilmischkammer (6) zugeführte Luftverteilmischkammerluftstrom um einen weiteren mengenmäßig variabelen zonenbezogenen Druckrumpfluftstrom (30), der von mindestens einer lokalen Rezirkulationseinheit (4) über die zwischengeschaltete Rezirkulations-versorgungsleitung temperatur- / kabinenbezogen anteilig eingespeist wird, zu einem Gesamtluftstrom ergänzt wird. Weiter ist den Nachmischeinheiten jeweils eine Temperaturzonenluftversorgungsleitung (9), die der betreffenden Temperatur- / Kabinenzone angeschlossen ist, verbunden, über die der Gesamtluftstrom temperatur- / kabinenzonenbezogen der einzelnen Temperatur- / Kabinenzone eingespeist wird.

## Beschreibung

Die Erfindung bezieht sich auf eine Hochleistungsklimaaniage mit redundanter und gestufter Rezirkulationszumischung für ein Verkehrsflugzeug gemäß dem Oberbegriff des Anspruches 1. Mit Ihr wird ein fehlertoleranter (redundanter) Rohrvereisungsschutz der Rohrleitungsinstallation des Hochleistungskühisystems während des Betriebes umgesetzt.

In Verkehrsflugzeugen werden Passagiere mit klimatisierter Luft versorgt. Dabei wird den Triebwerken hochverdichtete Luft entnommen, die an die Klimaaggregate weitergeleitet und dort auf Kabinendruckniveau entspannt und gekühlt sowie nachfolgend durch ein Rohrleitungsnetz den Passagierklima-zonen zugeleitet wird. Durch die große Wärmelast in den Passagierklimazonen ist es überwiegend notwendig, die Versorgungsluft durch die Klimaaggregate stark abzukühlen. Hier erreicht die Lufttemperatur Werte weit unterhalb des Wassergefrierpunktes. Da in den unteren Schichten der Atmosphäre der Wassergehalt der Luft groß genug ist, in der durch das Klimaaggregat abgekühlte Luft in Form von Schnee oder Eis auszukondensieren, besteht eine Notwendigkeit, das nachfolgende Rohrnetz vor diesem Schnee und dem Eis zu schützen, weil immer die Gefahr von auftretenden Rohrverstopfungen oder abbrechenden, wandernden Schneeansammlungen besteht, welche später nach dem Aufschmelzen zu unkontrollierbaren Flüssigkeitsansammlungen führt. Rohrblockaden stellen eine Absperrung der Frischluftversorgung zu den Passagierklimazonen dar, welche zu möglichen Gesundheitsschäden der Passagiere führt.

Daher besteht ein allgemeines Verlangen, die Gefahr von Eisansatz in Klimaanlagen durch unterschiedliche konzeptionelle Lösungen zu vermeiden. Auf diese Ansätze soll nachfolgend eingegangen werden. Ein erster Ansatz ist, die Temperatur der gekühlten Luft nicht unter den Wassergefrierpunkt sinken zu lassen. Um dann eine geforderte Kühlenergie bereitzustellen, ist ein großer Zuluftmassenstrom notwendig, welcher energiereich aus dem Triebwerk entnommen wird. Um komfortabele Passagierklimazonen-Einblastemperaturen und (notwendig) ausreichend große Ventilationseigenschaften zu erreichen, wird der Druckrumpfluft eine entsprechende Menge von gekühlter Luft zugemischt, deren Maßnahme unter der Bezeichnung "Luftrezirkulation" bekannt ist. Diese Lösung ist im Airbus A300-600 und A310 verwirklicht, mit der aber unangemessen viel Triebwerksluft zur Kühlung der Passagierklimazonen, im weiteren Zone(n) genannt, verbraucht wird, da die Luftkühlung im Klimaaggregat limitiert ist.

Auch die Boeing B747 realisiert diesen Ansatz. Doch wird dort versucht, in einer ersten Rezirkulationsstufe nachfolgend einer Verteilleitung, eine Temperaturerhöhung durch Mischung von Kühlluft und Rezirkulationsluft zu erzielen. Diese Maßnahme wird zonenbezogen umgesetzt. Die gewünschten Ventilations- und Komforteigenschaften werden durch Ergänzung weiterer Rezirkulationsluft in einer zweiten Stufe erreicht. Die Aufsplittung der Rezirkulationsstufen geht einher mit der Reduzierung von Rohrquerschnitten und den dazugehörigen Rohrgewichten zwischen den Stufen.

Durch die nachfolgend einer Verteilung geschaltete Vermischung wird allerdings die Gefahr von Eisansatz mit einhergehender Rohrblockade nicht vermieden. Dieses gilt gleichermaßen für Normal- und Fehlerbetriebsfälle.

Auch bei einem Ausfall einer Rezirkulationseinheit kann die Versorgung der zweiten vorhandenen und betreibbaren Rezirkulationseinheit diesen Ausfall nicht kompensieren. Damit bleibt, wie bei dem Airbus A300-600 und A310, die Klimaaggregatauslaßtemperatur limitiert. Zur Kompensation des Kühlenergieverlustes kann nur der energiereiche Triebwerksluflmassenstrom erhöht werden, welches zu einem höheren Treibstoffverbrauch führt.

Diesen Nachteil versucht man in dem Airbus A340 und A320 zu umgehen, in dem die gesamte Kühl- und Rezirkulationsluft zentral in einer Mischeinheit zusammengeführt wird. Dadurch erreicht man eine hohe Ausfallredundanz für Kühlluft- und Rezirkulationsluftversorgungsausfälle.

Einhergehend mit diesem Ansatz erkennt der Fachmann, daß die Vereisung der Kühlluftversorgungsleitungen im Druckrumpfbereich nicht vermieden wird, komplizierte Rohranordnungen an der Mischkammer sowie strömungsbeeinflußende Bauteile notwendig sind, um den Mischprozeß optimal zu gestalten. Eine Restvereisung durch Strömungsablösegebiete bleibt dennoch nicht ausgeschlossen. Des weiteren wird der Gesamtluftbedarf zur Erreichung der Ventilations- und Komforteigenschaften in einer zentralen Mischkammer bereitgestellt und an die Zonen verteilt, welches im Vergleich zur Anordnung nach der B747 mit einer entsprechenden Dimensionierung großer Rohrquerschnitten und einem erhöhtem Rohrgewicht einhergeht.

Als weitergehenden Ansatz verwirklicht die Boeing B777 einen kombinierenden Ansatz der B747 und des Airbus A340/A320. Die B777 verwendet eine zentrale Mischkammer, der eine Kühlluftversorgung mit und eine Kühlluftversorgung ohne konstanter Razirkulationsluftzumischung zugeordnet ist. Als Ergänzung wird zur Erreichung entsprechender Ventilations- und Komforteigenschaften mengen-mäßig eine weitere konstante Rezirkulationsluftmenge lokal zugemischt. Der Kühlluftversorgung ohne Rezirkulationsluftzumischung haften die bereits beschriebenen Nachteile der Rohrvereisung, also die dadurch bestehende Temperaturlimitierung und der damit verbundene Kühlenergieverlust, an. Auch bei dem Ausfall der Rezirkulationsluftzumischung an der Kühlluftversorgung müssen beide Kühlluftversorgungs- Lufttemperaturen oberhalb des Wassergefrierpunktes gehalten werden, welches eine erhebliche Kühlenergieeinbuße darstellt.

Außerdem wird von der US-A 4,517,813 ein Klimasystem mit einem sogenannten Luftmisch-Wasserabscheider-Rohrverzweiger (Air Mix- Water Separator - Manifold) vorgestellt, dem doppelseitig entsprechend temperierte Luftmengen zugeführt werden, dabei die zugeführte Luft sich aus anteilig bezogenen Luftmengen von warmer rezirkulierter Kabinenluft, die mit kühlen Luftmengen, welche von einer ACM (Air Cycle Machine) zugeführt werden, vereint wird, zusammensetzt.

Mit diesem Verzweiger, dessen Abgänge mit verschiedenen Rumpfbereichen eines Passagierflugzeuges, von denen das Cockpitbereich (Flight Deck), ein vorderer Passagierbereich (Forward Passenger Zone) und ein hinterer Passagierbereich (After Passenger Zone) bildlich erwähnt werden, verbunden sind, wird ein Mischen der ihm zugeführten Luftmengen und gleichfalls ein Abscheiden von Wasseranteilen aus der (angefeuchteten) Zuluft, sicher auch wegen der Vermeidung von Eisbildung oder Eisansätzen (möglicherweise auch schneekristallinen Wandlungen der Luftfeuchte) auf den nachgeschalteten Luftleitungen, bezweckt. Entsprechende Lösungsvorschläge werden dazu in der Druckschrift vorgestellt, mit denen man die Lösung des dieser Erfindung zugrundeliegenden Problems anstrebt. Es mag nun sein, daß man damit einen Rohrvereisungsschutz der Rohrleitungsinstallation eines Flugzeuges (teilweise) umsetzen wird, der sich aber- mit dem (einem Klimasystem integrierten) - Luftmisch- Wasserabscheider-Rohrverzweiger - auf eine einstufige (also nicht mehrstufige) Rezirkulationszumischung bezieht, und auch keine Gewähr dafür bieten wird, das Leitungsverstopfungen der ihm nachgeschalteteten (mehrfachverzweiten) Rohrleitungen, die (einmal angenommen) einer (komplexen) Hochleistungsklimaanlage integriert sind, die infolge von Wärmeenergieverlust(en) auf den Leitungsstrecken unvorhergesehen (ohne Vorsehung von diesen Umstand behindernden Maßnahmen) auftreten werden, vermieden werden. Es werden auch keinerlei Hinweise und Anregungen vermittelt, nach denen ein durchschnittliche Fachmann mit seinen Erfahrungen und seinem kreativem Zutun zu einer Lösung gelangen würde, mit der er die Fachwelt mit einem Klimasystem für ein Verkehrsflugzeug, welches einen fehlertoleraten (redundanten) Rohrvereisungsschutz durch ausgewogene Rezirkulationsluftzumischung in Verbindung mit einem auf rationelle Weise luftstromversorgten Hochleistungskühl-system und einer maximalen Luftversorgung der zu klimatisierenden Flugzeug-Rumpfbereiche umsetzen wird, um vordefinierte Ventilations- / Komforteigenschaften zu erreichen, überraschen würde.

Demzufolge liegt der Erfindung die Aufgabe zugrunde, ein Klimasystem für ein Verkehrsflugzeug vorzuschlagen, welches einen fehlertoleraten (redundanten) Rohrvereisungsschutz durch ausgewogene Rezirkulationsluftzumischung in Verbindung mit dem Betrieb eines Hochleistungskühlsystems mit minimaler Luftmassenstromnutzung und maximaler Luftmengenbereitstellung zu den Passagierkabinenklimazonen beinhaltet, um die vorgegebenen Ventilations- / Komforteigenschaften zu erreichen.

Diese Aufgabe wird durch die im Anspruch 1 angegebene Maßnahme gelöst. In den weiteren Unteransprüchen sind zweckmäßige Ausgestaltungen dieser Maßnahme angegeben.

Die Erfindung ist in einem Ausführungsbeispiel anhand der beigefügten Zeichnung näher beschrieben.

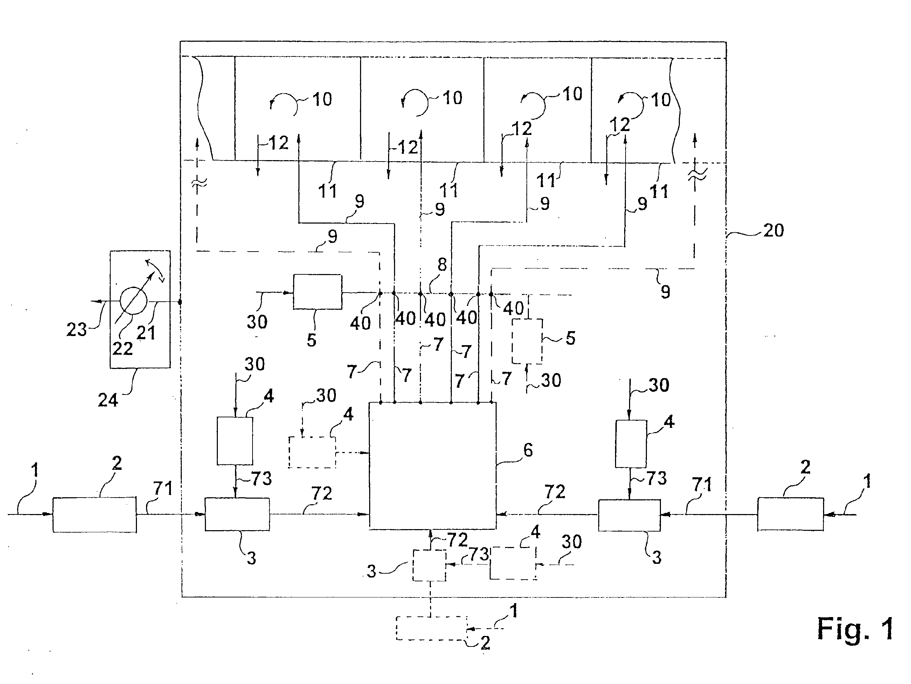

Dazu zeigt die
- Fig. 1: ein Blockschaltbild der Hochleistungsklimaanlage mit redundanter und gestufter Rezirkulationszumischung.

Das in der Fig. 1 dargestellte Blockschaltbild bezieht sich auf den Anwendungsfall einer Hochleistungsklimaanlage mit redundanter und gestufter Rezirkulationszumischung für ein Passagierflugzeug.

Anknüpfend an die einleitend vorgestellten Lösungsansätze für eine Klimaanlage mit Kühlluftaggregaten und nachgeschalteten Mischeinheiten zur Erreichung von entsprechenden Ventilations- / Komforteigenschaften in Passagierzonen - wird klar -, daß der Rohrvereisungsschutz unmittelbar nach dem Durchtritt jeder Kühlluftversorgungsleitung in den Druckrumpf erfolgen muß, um in einer ersten Vormischung von kalter Kühlluft mit warmer Druckrumpfluft einer Rohrnetzkomponentenvereisung bei allen möglichen Kühilufttemperaturen vorzubeugen. Die Druckrumpfluftmenge wird hierbei auf ein äußerstes Minimum beschränkt und dann in mindestens einer weiteren Luflmengenergänzung auf das Niveau einer gewünschten Gesamtluftmenge erhöht, um vorgegebene Ventilations- und Komforteigenschaften (Luftgeschwindigkeits- / Temperaturverteilungen) in den Passagierklimazonen bereitzustellen.

In der Fig. 1 wird nun der Schaltungsaufbau einer Hochleistungsklimaanlage dargestellt, worauf nachfolgend näher eingegangen wird. Außerhalb des Druckrumpfes 20 (Flugzeugrumpfes) werden mindestens zwei (oder mehr) Klimaaggregate 2 von Hochdruckluftversorgungen 1 versorgt, welche eine von den Lufferzeugungseinheiten (Triebwerke, APU oder Bodenaggregate) abkühlte und auf das Druckrumpf-Druckeingangsniveau entspannte hochverdichtete Luft (Kühlluft) bereitstellen, die über Kaltluftversorgungsleitungen 71 den Druckrumpf 20 mit Kühlluft versorgen und somit dort den Vormischeinheiten 3 bereitgestellt wird. Den Vormischeinheiten 3, die aus Rohrzusammenführungen oder Turbomaschinenspiralgehäusen bestehend sind, wird über die Rezirkulationseinheiten 4, die aus Lüftern, Einwegeventilen und Luftreinigungselementen (beispielsweise Filtern) bestehend sind, durch Rezirkulationsluftzuleitungen 73 entsprechende Druckrumpfluft 30 zugeleitet. In den Vormischeinheiten 3 wird die kalte Kühlluft mit der warmen Druckrumpfluft 30 gemischt und dadurch auf ein Temperaturniveau oberhalb des Wassergefrierpunktes gehoben. In der Vormischkammer 3 wird mengenmäßig nur soviel Druckrumpfluft 30 zugeleitet, so daß das gewünschte Temperatumiveau erreicht wird. Dies führt im Betrieb dann zu variabelen Vormischluftmengen, die die Vormischkammern verlassen.

An diesem Punkt wird hervorgehoben, daß jedem Klimaaggregat 2 immer eine Vormischeinheit 3 nachgeschaltet ist. Dies gilt auch bei einer Anzahl an Klimaaggregaten, die größer als zwei ist.

Die Vormischluft wird nachfolgend über die Vormischversorgungsleitungen 72 der Luftverteilmischkammer 6 zugeleitet. Hier besteht die Möglichkeit, weitere Druckrumpfluft 30 über Rezirkulationseinheiten 4 zu ergänzen.

Der Lufiverteilmischkammer 6 sind mehrere Mischluftführungsleitungen 7 abgezweigt, in denen von der Luftverteilmischkammer 6 bereitgestellte vorgegebene Anteile an Luftverteilmischkammerluft transferiert wird, die den ihnen angeschlossenen Temperatur- /Kabinenzonen 11 bereitgestellt wird.

Den Mischluftführungsleitungen 7 nachgeschaltet sind mehrere lokale Nachmischeinheiten 40, in denen die mengenmäßig vorbestimmte, zonenbezogene Luftverteilmischkammerluft um einen weiteren Druckrumpfluftanteil zu einer vorgegebenen, kabinenzonenbezogenen Gesamtluftmenge ergänzt wird. Diese kabinenzonenbezogene, anteilige Druckrumpfluft wird über eine lokale Rezirkulationseinheit 5 und einer ihr verbundenen Rezirkulationsluftversorgungsleitung 8 den Nachmischeinheiten 40 zugeführt. Die kabinenzonenbezogene Gesamtluftmenge wird von den Nachmischeinheiten 40 über Temperaturzonenluftversorgungsleitungen 9 den Kabinenzonen 11 bereitgestellt, dort ausgeblasen, daraufhin es zu einer definierten Raumluftströmung 10 in den Kabinenzonen 11 führen wird. Die Luft der Raumluftströmung 10 verläßt nach einer Verweilzeit die Kabinenzonen 11 über kabinenzonenzugeordnete Zonenabluftöffnungen 12 in den Druckrumpf 20. Dieser Luftstrom teilt sich dann in die Anteile von Druckrumpfluft 30 und von Abluft in die Flugzeugumgebung 23 auf. Hierbei passiert der in die Flugzeugumgebung 23 abgeführte Luftstrom der Abluft eine Druckrumpfluftzuführung 21 zu einem Druckrumpfdruckregelventil 22, welches durch seine Drosselwirkung den Druckrumpfdruck bestimmt.

Als weiter Ausgestaltung wird davon ausgegangen, daß das Klimaaggregat 2 luftmengenmäßig und lufttemperaturmäßig regelbar betreibbar ist. Desweiteren wird angenommen, daß die Rezirkulationseinheiten 4, 5 luftmengenmäßig variabel betrieben werden.

Nachfolgend soll auf das redundante Verhalten des Systems weiterführend eingegangen werden. Wie aus der Fig. 1 ersichtlich - ist das Klimasystem mit zwei Klimaaggregaten 2 ausgerüstet, denen nachgeschaltet zwei Vormischeinheiten 3 angeordnet sind. Den Vormischeinheiten 3 zugeschaltet sind jeweils eine Rezirkulationseinheit 4. Bei dem fehlenden Ausfall eines Klimaaggregats 2 wird die nachgeschaltete Vormischeinheit 3 weiter mit Druckrumpfluft 30 versorgt. Die dem weiteren Klimaaggregat 2 zugeordnete Vormischeinheit 3 erfüllt weiter die Aufgabe des Vereisungsschutzes, auch wenn die Kühllufttemperatur weit abgesenkt wird, um den Gesamtkühlenergiebedarf auszugleichen. Auch bei dem Ausfall einer Rezirkulationseinheit 4 wird weiterhin der Vereisungsschutz gewährleistet, in dem das der ausgefallenen Rezirkulationseinheit 4 zugeordnete Klimaaggregat 2 Kühllufttemperaturen oberhalb des Wassergefrierpunktes der Luftverteilmischkammer 6 zuleitet, das weitere Klimaaggregat 2 die von ihm gelieferte Kühllufttemperatur tiefer absenkt, die ihm zugeschaltete Rezirkulationseinheit 4 durch Erhöhung des Druckrumpfluftdurchsatzes den notwendigen Vereisungsschutz in der Vormischeinheit 3 sicherstellt.

Besonders hervorzuheben ist, daß die lokale Rezirkulationseinheit 5 über die Rezirkulationsluftversorgungsleitung 8 den mengenmäßigen Ausgleich zum Erhalt der Gesamtluftmenge zu den Kabinenzonen 11 variabel sicherstellt.

Die vorgestellte Lösung bezieht sich demnach auf eine Anordnung eines Klimasystems, in dem ein mengenmäßig variabeler Kühlluftstrom über Klimaaggregate temperaturniveaumäßig variable dem Druckrumpf zugeleitet wird, dort in unmittelbar nachfolgend geschaltenen Vormischeinheiten über Rezirkulationseinheiten bereitgestellte mengenmäßig variabele Druckrumpfluft zum Rohrvereisungsschutz zugemischt wird, und nach Weiterleitung durch ein Rohrsystem um weitere mengenmäßig variabel bereitgestellter Druckrumpfluft ergänzt zu werden. Diese Gesamtluftmenge wird nach der Zuleitung und der Durchströmung der Kabinenzonen dem Druckrumpf eingeleitet. Diese Druckrumpfluft wird teilweise für vorgenannte Aufgaben genutzt und restlich über eine Druckrumpfdruckregeleinheit der Flugzeugumgebung zugegeben.

## Patentansprüche

1. **Hochleistungsklimaanlage mit redundanter und gestufter Rezirkulationszumischung für ein Verkehrsflugzeug**, bei der die in einem Druckrumpf (20) mit zugeordneter Druckregelanlage (24) integrierten Temperatur- / Kabinenzonen (11) Luft aus einer Hochdruckluftversorgung (1) beziehen, **gekennzeichnet durch folgende Merkmale**, wonach mindestens zwei Klimaaggregate (2), die eine von der Hochdruckluftversorgung (1) eingespeiste abgekühlte Druckluft, die hochverdichtet und wasserdampfenthaltend ist, auf ein Druckrumpfeingangsdruckniveau entspannen und die den Luftstrom dieser Druckluft gleichzeitig bis zu Temperaturen unterhalb des Wassergefrierpunktes abkühlen, mit im Druckrumpf (20) angeordneten Vormischanlagen (3), die dem betreffenden Klimaaggregat (2) unmittelbar einzeln nachgeschaltet sind, denen klimaaggregatausgangsseitig ein aufbereiteter Klimaaggregatluftstrom bereitgestellt und zugeleitet wird, über eine Kaltluftversorgungsleitung (71) verbunden sind, außerdem die dem betreffenden Klimaaggregat (2) nachgeschaltete einzelne Vormischanlage (3) über eine Rezirkulationsluftzuleitung (73) mit wenigstens einer Rezirkulationseinheit (4), die mit einer Druckrumpfluft (30) versorgt wird, verbunden ist, wobei die von der einzelnen Rezirkulationseinheit (4) zugeführte Druckrumpfluft (30) mengenmäßig variabel der betreffenden Vormischanlage (3) zugeleitet und mit dem Klimaaggregatluftstrom mengenmäßig gemischt wird, weiter die einzelne Vormischeinheit (3), die ausgangsseitig eine aus der Druckrumpfluft (30) und der Klimaaggregatluft bestehende vorgemischte Luft bereitstellt, über eine Vormischluftversorgungsleitung (72) einer Luftverteilmischkammer (6), der die vorgemischte Luft zugeführt wird, angeschlossen ist, wobei die Luftverteilmischkammer (6) die ihr zugeführte vorgemischte Luft sammelt und vereinigt, die diese vereinigte gesammelte Luft als Luftverteilmischkammerluft von den angeschlossenen Vormischanlagen (3) ausgangsseitig bereitstellt und mengenmäßig über ihr angeschlossene Mischluftführungsleitungen (7), denen jeweils eine Nachmischeinheit (40) angeschlossen ist, letzteren zuleitet, außerdem die Nachmischeinheiten (40), die einer Rezirkulationsversorgungsleitung (8) angeschlossen sind, mit mindestens einer der Rezirkulationsversorgungsleitung (8) angeschlossenen lokalen Rezirkulationseinheit (5) verbunden sind, in denen der von der Luftverteilmischkammer (6) zugeführte Luftverteilmischkammerluftstrom um einen weiteren mengenmäßig variabelen zonenbezogenen Druckrumpfluftstrom, der von mindestens einer lokalen Rezirkulationseinheit (5) über die zwischengeschaltete Rezirkulationsversorgungsleitung (8) temperatur- /kabinenbezogen anteilig eingespeist wird, zu einem Gesamtluftstrom ergänzt wird, weiter den Nachmischeinheiten (40) jeweils eine Temperaturzonenluftversorgungsleitung (9), die der betreffenden Temperatur- / Kabinenzone (11) angeschlossen ist, verbunden ist, über die der Gesamtluftstrom temperatur- / kabinenzonenbezogen der einzelnen Temperatur- / Kabinenzone (11) eingespeist wird.

2. **Hochleistungsklimaanlage** nach Anspruch 1, **dadurch gekennzeichnet**, daß den einzelnen Temperatur- / Kabinenzonen (11) des Druckrumpfes (20) eine als Rohr- oder Kanalelement ausgebildete Temperaturzonenluftversorgungsleitung (9) angeschlossen ist, von der aus der von der einzelnen Nachmischeinheit (40) bereitgestellte Gesamtluftstrom dem Raumbereich der Temperatur- / Kabinenzonen (11)eingeblasen wird und mit ihm eine Raumluftströmung ausgelöst wird.

3. **Hochleistungsklimaanlage** nach den Ansprüchen 1 und 3, **dadurch gekennzeichnet, daß** die Temperatur- / Kabinenzonen (11) mit Trennwänden abgegrenzt sind, denen temperatur- / kabinenzonenintegrierte Abluftöffnungen eingelassen sind, durch die der Gesamtluftstrom den Raumbereich der Temperatur- / Kabinenzonen (11) verläßt.

4. **Hochleistungsklimaanlage** nach Anspruch 1, **dadurch gekennzeichnet**, daß den Rezirkulationseinheiten (4, 5) wenigstens ein Luftreinungungselement integriert ist.

5. **Hochleistungsklimaanlage** nach Anspruch 1, **dadurch gekennzeichnet**, daß die Rezirkulationseinheiten (4, 5) mit der Minimalkonfiguration von wenigstens einem drehzahlgeregelten Lüfter und wenigstens einem Rückschlagventil und wenigstens einem Luftreinigungselemente ausgerüstet sind.

6. **Hochleistungsklimaanlage** nach Anspruch 1, **dadurch gekennzeichnet, daß** die Vormischungseinheit (3) aus Rohrzusammenführungskomponenten bestehend ist.

7. **Hochleistungsklimaanlage** nach Anspruch 1, **dadurch gekennzeichnet, daß** die Vormischeinheit (3) aus Turbomaschinenspiralgehäusen mit oder ohne integrierter Injektordüse bestehend sind.

8. **Hochleistungsklimaanlage** nach Anspruch 1, **dadurch gekennzeichnet, daß** der Luftverteilmischkammer (6) luftstromaufteilende und / oder luftstrombeeinflußende Bauteile integriert sind.

9. **Hochleistungsklimaanlage** nach Anspruch 1, **dadurch gekennzeichnet**, daß die Nachmischeinheit (40) aus Rohrzusammenführungskomponenten bestehend ist.

10. **Hochleistungsklimaanlage** nach Anspruch 1, **dadurch gekennzeichnet**, daß die Nachmischeinheit (40) aus einem Turbomaschinenspiralgehäuse mit oder ohne integrierter Injektordüse bestehend ist.

11. **Hochleistungsklimaanlage** nach Anspruch 1, **dadurch gekennzeichnet**, daß dem Klimaaggregat (2) ein thermodynamischer Kompressions- / Entspannungszyklus mit Zwischenkühlung integriert ist.

12. **Hochleistungsklimaanlage** nach den Ansprüchen 1 und 11, **dadurch gekennzeichnet**, daß dem Klimaaggregat (2) zusätzlich ein Wasserabscheidungszyklus integriert ist.

13. **Hochleistungsklimaanlage** nach den Ansprüchen 1 und 11, **dadurch gekennzeichnet**, daß dem Klimaaggregat (2) ein drehzahlgeregeltes Gebläse integriert ist, das den zugeführten Luftstrom mengenmäßig regeln wird.

14. **Hochleistungsklimaanlage** nach den Ansprüchen 1 und 12, **dadurch gekennzeichnet**, daß dem Klimaaggregat (2) ein Kühlelement integriert ist, mit dem die zugelassene Luftstromtemperatur des abgegebenen Luftstromes geregelt wird.
